# EUROPÄISCHE PATENTSCHRIFT

(11) **EP 2 492 713 B1**
(45) Veröffentlichungstag und Bekanntmachung des Hinweises auf die Patenterteilung: **27.08.2014**
(21) Anmeldenummer: 12156500.6
(22) Anmeldetag: 22.02.2012
(51) Int. Cl.: G01V 1/38

(54) **Schleppsonaranlage sowie Verfahren zum Durchführen einer Sonarmission mittels einer derartigen Schleppsonaranlage**
Towed sonar assembly and method for performing a sonar mission using such a towed sonar assembly
Installation de flûte sonar ainsi que procédé d'exécution d'une mission sonar à l'aide d'une telle installation de flûte sonar

(30) Priorität: 25.02.2011 DE 102011000948
(43) Veröffentlichungstag der Anmeldung: 29.08.2012
(73) Patentinhaber: ATLAS ELEKTRONIK GmbH, 28309 Bremen (DE)
(72) Erfinder: Dinter, Jens-Heiko, 28857 Syke (DE); Fass, Uwe, 28325 Bremen (DE)

(56) Entgegenhaltungen:
- DE-A1-102009 019 556
- US-A- 3 093 333
- US-A- 5 080 530
- US-A- 5 902 072
- US-A1- 2008 267 009
- US-A1- 2010 074 048

## Beschreibung

Die Erfindung betrifft eine Schleppsonaranlage nach dem Oberbegriff des Anspruchs 1 sowie ein Verfahren zum Durchführen einer Sonarmission mittels einer derartigen Schleppsonaranlage.

Herkömmliche Schleppsonaranlagen weisen eine Schleppantenne auf, die insbesondere eine Schleppkabel sowie einen akustisch wirkenden Abschnitt mit Hydrophonen bzw. elektroakustischen Wandlern und ggf. ein Endstück zur Stabilisierung der Lage und Ausrichtung der Schleppantenne im Wasser aufweist. Derartige Schleppantennen werden bei Oberflächenschiffen am Heck eines Schiffes installiert und mittels einer dort befestigten Winde zum Verbringen der Schleppantenne in das umgebende Gewässer verbracht bzw. mittels dieser Winde wieder eingeholt.

US 2010/0064955 A1 zeigt ein Verbringungssystem mit einer derartigen Winde zum Verbringen einer Schleppantenne und eines tauchfähigen Schwimmkörpers in ein Gewässer und zum Einholen der Schleppantenne und des tauchfähigen Schwimmkörpers aus dem Gewässer. Das Verbringungssystem ist neben dem Verbringen in das Gewässer und dem Einholen aus dem Gewässer derart ausgebildet, um den tauchfähigen Schwimmkörper mit dem Schleppseil der Schleppantenne automatisch beim Verbringen zu verbinden und beim Einholen wieder zu trennen. Der tauchfähige Schwimmkörper entspricht hierbei einem sogenannten Sonarfisch, der aktiv Schallwellen aussendet. Die ausgesendeten Schallwellen werden dann, z.B. nach Reflexion am Boden des Gewässers, mit dem akustisch wirkenden Abschnitt der Schleppantenne aufgenommen und daraus an Bord des Schiffs Sonardaten ermittelt.

DE 10 2009 091 556 A1 zeigt noch eine weiteres Verbringungssystem, mit dem eine landgestützte Verbringung eines Unterwasserlaufkörpers ermöglicht wird.

An Bord eines Schiffes mit einem Verbringungssystem zum Verbringen von Schleppantennen befindet sich eine mit der Schleppantenne verbundene Signalverarbeitungseinrichtung, in der die gewonnenen Sonardaten verarbeitet werden, um ein Lagebild anderer Wasserfahrzeuge zu erhalten. An Bord des Schiffes befindet sich daher wenigstens eine Steuerkonsole zum Bedienen und Steuern der Schleppsonaranlage sowie zum Darstellen der ermittelten Lage. Ggf. erfolgt die Steuerung der Schleppsonaranlage sowie die Lagedarstellung jedoch an unterschiedlichen Konsolen.

Winden zum Ausbringen von derartigen Schleppantennen benötigen einen relativ großen Raum, der üblicherweise am Heck eines Schiffes bereitgestellt werden muss.

Da jedoch derartige Schleppsonare nicht permanent eingesetzt werden, sondern meist nur in besonderen Bedrohungslagen oder zu Übungszwecken, wird dieser heckseitige Raum, an dem die Winde installiert ist, oftmals nutzlos blockiert. Hierdurch werden die insgesamt anfallenden Kosten bei Bereitstellung von Schleppsonaranlagen signifikant erhöht und somit die Kosteneffizienz von Schleppsonaranlagen reduziert.

US 2008/0267009 A1 offenbart ein Verfahren zum Ausbringen und Einholen von seismischen Kabeln sowie ein System dazu. Das System weist mehrere Container auf, in denen zeitweise seismisches Ausrüstungsmaterial gelagert wird. Wenigstens einige der Container sind dazu ausgebildet, lösbar mit dem Deck eines Wasserfahrzeugs verbunden zu werden. Ferner weist das System wenigstens einen Container auf, der eine Kabeltrommel mit wenigstens einem auf die Kabeltrommel aufgewickelten seismischen Kabel aufweist.

Gemäß dem offenbarten Verfahren in D1 wird das seismische Kabel aus wenigstens einem Container ausgebracht.

US 5,080,530 A offenbart ein Wasserfahrzeug, nämlich einen Frachter oder ein Küstenschiff, das zeitweise umgerüstet wird, um Kabel im Küstenbereich zu verlegen. Das Wasserfahrzeug weist dazu - zusätzlich zu seiner normalen Ausrüstung - ein Heckstrahlruder, eine Kabelverlegemaschine, ein Modul zur Unterbringung der Crew sowie eines Generators, Anlagen zur Kontrolle und Ausbringung des Kabels und Mittel, um die zusätzlichen Ausrüstungsgegenstände zur Wiederverwendung vom Wasserfahrzeug zu entfernen, auf.

Nach alledem liegt der Erfindung daher das Problem zugrunde, Schleppsonaranlagen effirienter zu gestalten.

Die Erfindung löst dieses Problem mittels einer Schleppsonaranlage gemäß Anspruch 1 sowie mittels eines Verfahrens zum Durchführen einer Sonarmission gemäß Anspruch 8.

Eine erfindungsgemäße Schleppsonaranlage ist daher mit einer Schleppantenne, einer Verbringungseinrichtung, insbesondere Winde, zum Verbringen der Schleppantenne in ein bzw. aus einem Gewässer, wie einem Meer, einem Binnenmeer, einem See, einem Fluss oder einer Flussmündung, einer Signalverarbeitungseinrichtung zur Verarbeitung der Signale der Schleppantenne und wenigstens einer Steuerkonsole zum Steuern der Schleppsonaranlage ausgerüstet, wobei die Schleppantenne, die Verbringungseinrichtung, die Signalverarbeitungseinrichtung und die Steuerkonsole in einem unabhängig von einem Schiff transportierbaren Container installiert sind.

Das erfindungsgemäße Verfahren zum Durchführen einer Sonarmission sieht die Verwendung einer derartigen Schleppsonaranlage vor und weist folgende Schritte auf:
a) Transportieren der Schleppsonaranlage zu einem Betriebsort,
b) Öffnen einer Tür des Containers,
c) Ausbringen der Schleppantenne aus dem Container durch die geöffnete Tür in ein Gewässer mittels der Verbringungseinrichtung,
d) Steuern einer Sonarmission mittels Steuerkonsole innerhalb des Containers,
e) Einholen der Schleppantenne aus dem Gewässer in den Container nach Beendigung der Sonarmission und
f) nachfolgendes Schließen der Tür.

Die Erfindung schafft somit eine mobile, schiffsunabhängige verbringbare Sonaranlage. Die Erfindung ermöglicht daher, den durch die Winde einer Schleppsonaranlage blockierten Raum an Bord eines Schiffes freizugeben, sofern die Schleppsonaranlage nicht benötigt wird. Die Erfindung ermöglicht ferner eine einzige Schleppsonaranlage auf einer Vielzahl von Schiffen oder schwimmfähigen Plattformen oder landseitigen Standorten, z.B. zum Schutz von Hafenanlagen einzusetzen. Der genannte Container ist daher vorzugsweise allseitig verschließbar und wasserdicht und dient zum Schutz der Schleppantenne sowie der gesamten Schleppsonaranlage vor Umwelteinflüssen und Seeschlag beim Transport.

Gemäß einer besonderen Ausführungsform wird die Schleppsonaranlage nach Durchführung einer Sonarmission zu einem neuen Betriebsort oder einem Lagerort abtransportiert. Dies ist vorteilhaft, da somit mit nur einer oder einigen wenigen Schleppsonaranlagen gefährdete Seegebiete wirksam überwacht werden können, indem ein und dieselbe Schleppsonaranlage auf verschiedenen Schiffen das betreffende Seegebiet immer wieder durchfährt und somit im Wesentlichen kontinuierlich eine umfassende Überwachung eines Seegebiets mit geringem Aufwand möglich ist. Das erfindungsgemäße mobile Schleppsonarsystem ermöglicht somit auch einen kostengünstigen Schutz vor Piraten, indem bspw. besonders von Piratenübergriffen betroffene Seegebiete mit nur einem oder einigen wenigen erfindungsgemäßen mobilen Schleppsonaranlagen überwacht werden. Dank der Unterbringung derartiger Schleppsonaranlagen in einem Container können derartige Schleppsonaranlagen problemlos von einem Schiff auf ein anderes versetzt werden. Ein derartiges Umsetzen eines einzigen Containers kann innerhalb kürzester Zeit erfolgen und ist folglich wesentlich weniger zeitaufwändig als die Ausrüstung eines Schiffes mit einem stationären Schleppsonarsystem.

Bei einer besonderen Ausführungsform ist der Betriebsort ein heckseitiger Ort an oder unter Deck eines Schiffes. Bevorzugt wird der Container auf einem Helikopterdeck, welches sich oftmals am Heck eines Schiffes befindet, abgesetzt und verzurrt. Auf einem Containerschiff kann ein Container jedoch ebenfalls am heckseitigen Ende untergebracht sein, wodurch ein direkter Zugang zum umgebenden Gewässer gewährleistet ist. Ferner ist auch eine Unterbringung unter Deck möglich, sofern auf Höhe des Containers eine heckseitige Öffnung in der Bordwand des beherbergenden Schiffes vorgesehen ist.

Bei einer weiteren besonderen Ausführungsform ist der Betriebsort eine Hafeneinrichtung. Bspw. kann der Container der Schleppsonaranlage auf einer Kaimauer einer Hafenanlage abgestellt werden und die Schleppantenne im Bereich des Grundes der Hafenanlage verlegt werden. Eine derart installierte Sonaranlage dient dem Schutz sowie der Überwachung von Hafenanlagen.

Bei einer besonderen Ausführungsform ist die Schleppantenne daher schwerer als Wasser ausgebildet. Somit ist es möglich, die Schleppantenne am Gewässergrund bzw. Meeresgrund abzulegen, ohne dass eine spezielle Befestigung der Antenne erforderlich ist.

Bei einer weiteren besonderen Ausführungsform ist zumindest ein akustisch wirksamer Abschnitt der Schleppantenne an seinen beiden Enden mit Mitteln zum Befestigen von Verankerungseinrichtungen zum Verankern dieses Abschnitts am Gewässergrund versehen. Somit kann auch eine Schleppantenne mit dem spezifischen Gewicht von Wasser bzw. mit einer auftriebsneutralen Trimmung am Gewässergrund verankert werden.

Bei einer weiteren besonderen Ausführungsform weist der Container eine Funkkommunikationseinrichtung, insbesondere Satellitenkommunikationseinrichtung, zur Übertragung von Sonardaten von der Schleppsonaranlage an eine Führungsstelle außerhalb des Containers und/oder zum Empfang von Steuerdaten für die Schleppsonaranlage von der Führungsstelle auf.

Vorteilhafterweise überträgt dabei die Steuerkonsole Sonardaten an die Führungsstelle außerhalb des Containers bzw. empfängt von dort Steuerdaten. Somit ist eine Einbindung der Schleppsonaranlage in ein regional verteiltes Aufklärungsverbundsystem mit weiteren Sonar-, Radar-, Infrarotdetektions- und/oder Satellitenanlagen möglich. Die von der Schleppsonaranlage generierten Sonardaten werden dabei vorteilhafterweise an eine zentrale Führungsstelle und/oder zwecks Lagedarstellung auf die Kommandobrücke des Schiffes übertragen.

Bei einer weiteren besonderen Ausführungsform ist der Betriebsort ein Schiff und die Sonardaten werden per Funk an ein anderes Schiff übertragen. Dies dient speziell dem Schutz eines Verbandes, der bevorzugt Handelsschiffe umfasst, wobei wenigstens ein Schiff durch Aufnahme eines Containers mit der erfindungsgemäßen Schleppsonaranlage zu einem Aufklärungsschiff aufgewertet wird. Andere Schiffe dieses Verbandes können per Funk die Sonardaten empfangen. Somit kann jedes Schiff eines Verbandes eine Lagedarstellung erhalten und seine eigenen Schlüsse im Hinblick auf die Gefahr eines möglichen Angriffs, bspw. von Piraten, ziehen und ggf. geeignete Gegenmaßnahmen einleiten. Gemäß einer weiteren besonderen Ausführungsform werden Sonardaten weiterer Sonaranlagen, insbesondere weiterer Schleppsonaranlagen, Radardaten von Radaranlagen, Infrarotdetektionsdaten von Infrarotdetektionseinrichtungen, jeweils insbesondere an Bord anderer Schiffe, und/oder Satellitenüberwachungsdaten von Satellitenüberwachungsanlagen per Funk an die Steuerkonsole übertragen. Dies ist vorteilhaft, da somit eine Fusion von Sensordaten verschiedener Sensoren verschiedener Plattformen bzw. Einrichtungen zur verbesserten Lagedarstellung erfolgen kann.

Bei einer weiteren besonderen Ausführungsform weist der Container einen durch eine Trennwand in einem Steuerraum und einen Windenraum zweigeteilten Innenraum auf, wobei der Steuerraum hermetisch gegen die Umgebung abgedichtet ist bzw. abdichtbar ist und die Signalverarbeitungseinrichtung sowie die Steuerkonsole aufweist. Dabei weist der Windenraum die Verbringungseinrichtung auf, welche eine Winde umfasst. Eine derartige räumliche Trennung der maschinenbaulichen Komponenten, wie der Winde, sowie der elektronischen Komponenten, wie der Signalverarbeitungseinrichtung, ist vorteilhaft, da die regelmäßig empfindlichen elektronischen Komponenten somit klimatisch geschützt untergebracht sind. Dies gestattet Fahrten auch bei widrigen Umweltbedingungen, insbesondere bei großer Kälte oder großer Hitze sowie hoher Luftfeuchtigkeit.

Gemäß einer weiteren vorteilhaften Ausführungsform weist der Steuerraum eine Zugangstür, einen Notausstieg, ein Fenster zum Windenraum, eine Klimaanlage, eine Wärmedämmung zur Wärmedämmung des Steuerraums gegenüber der Umgebung, eine Heizungsanlage, Feuerlöschmittel, Erste-Hilfe-Mittel, eine Satellitentelefonanlage, Kommunikationseinrichtungen zur Kommunikation mit Einrichtungen an Bord des den Container beherbergenden Schiffes und/oder mit Einrichtungen außerhalb dieses Schiffes, eine Notstromversorgung, ein Satellitennavigationssystem und/oder ein automatisches Identifikationssystem auf. Vorteilhafterweise sind ferner weitere Büroeinrichtungen im Steuerraum vorgesehen, wie Sitzmöbel und Tische. Somit ist der Steuerraum ein vollwertiger Leitstand mit allen notwendigen Einrichtungen für einen Rund-Um-Die-Uhr-Einsatz mit Personal, das auch über viele Stunden oder Tage hinweg mit hoher Aufmerksamkeit das Schleppsonarsystem bedienen kann. Diese Einrichtungen ermöglichen insbesondere extreme Umweltbedingungen, z.B. große Kälte oder große Hitze und hohe Luftfeuchtigkeit, soweit wie möglich auf ein erträgliches Maß zu reduzieren. Bei einer weiteren vorteilhaften Ausführungsform weist die Schleppsonaranlage einen im Container installierten Spannungsumformer zur Bereitstellung einer vorbestimmten bzw. vorbestimmbaren elektrischen Ausgangsspannung bei variabler elektrischer Eingangspannung auf. Bevorzugt ist dieser Spannungsumformer im Steuerraum untergebracht. Durch eine Kabeldurchführung bzw. einen Anschluss an der Außenseite des Containers kann somit eine externe Stromversorgung an den Container angeschlossen werden, welche keiner besonderen Spezifikation bedarf. Der Spannungsumformer ermöglicht daher den Einsatz auf unterschiedlichen Plattformen mit unterschiedlicher elektrischer Infrastruktur. Der in den Container eingebaute Spannungsumformer sorgt nämlich dafür, dass die weiteren elektrischen und elektronischen Komponenten innerhalb des Containers die für sie erforderlichen elektrischen Spannungen erhalten. Somit lässt sich der Container und insbesondere seine Einbauten auf unterschiedlichsten Schiffstypen mit unterschiedlichen Bordnetzen betreiben. Selbst auf einem Schiff bzw. einer Plattform ohne eigene Stromversorgung, bspw. einem Segelschiff, kann der erfindungsgemäße Container verwendet und die Schleppsonaranlage betrieben werden; hierzu wäre lediglich ein externes Stromaggregat mit dem Container zu verbinden.

Weitere vorteilhafte Ausführungsformen ergeben sich aus den Unteransprüchen sowie aus den anhand der Zeichnung näher erläuterten Ausführungsbeispielen. In der Zeichnung zeigen:
- Fig. 1: eine Schnittdarstellung eines Ausführungsbeispiels einer erfindungsgemäßen Schleppsonaranlage in einem Container;
- Fig. 2: eine Seitenansicht einer Schleppsonaranlage gemäß Fig. 1 aufgestellt auf einem Helikopterdeck eines Schiffes;
- Fig. 3: die Schleppsonaranlage gemäß Fig. 2 in vergrößerter Darstellung;
- Fig. 4: eine Schleppsonaranlage gemäß Fig. 1 an einem ersten Betriebsort an Bord eines Containerschiffes und
- Fig. 5: eine Schleppsonaranlage gemäß Fig. 1 an einem zweiten Betriebsort an Bord eines Containerschiffes.

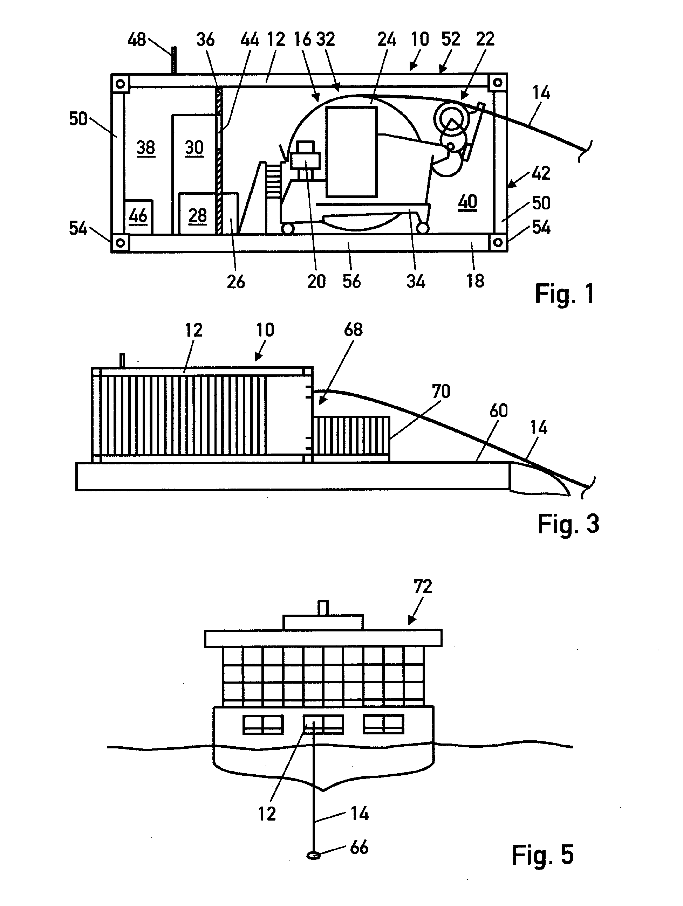

Fig. 1 zeigt eine mobile, transportierbare Schleppsonaranlage, die in einem Container 12, insbesondere in einem allseitig wasserdicht verschließbaren Seecontainer, installiert ist. Dieser Container 12 dient sowohl als Steuerstand als auch als Aufbewahrungsraum für die Schleppsonaranlage 10. Innerhalb des Containers sind insbesondere alle wesentlichen zum Betrieb einer Schleppsonaranlage erforderlichen Einrichtungen installiert. Neben der Schleppantenne 14 ist in dem Container 12 eine Winde 16 an einer bodenseitigen Rahmenkonstruktion 18 befestigt, die insbesondere zur Aufnahme hoher Zugkräfte bzw. -momente ausgelegt ist, die bei ausgefahrener Schleppantenne 14 über die Winde 16 auf den Container 12 bzw. die bodenseitige Rahmenkonstruktion 18 eingeleitet werden. Die Winde 16 beinhaltet einen elektrischen Antrieb 20 sowie einen Führungsschlitten 22 zur Führung der Schleppantenne 14, insbesondere während des Einholens und Aufrollens der Schleppantenne 14 auf die Windentrommel 24, aber auch beim Abrollen der Schleppantenne 14 während des Ausbringvorganges der Schleppantenne 14 in das umgebende Gewässer.

Innerhalb des Containers 12 ist ferner ein Spannungsumformer 26 installiert, der unterschiedliche elektrische Eingangsspannungen in eine oder mehrere vorbestimmte elektrische Ausgangsspannungen umformt. Die Sonarschleppanlage 10 kann somit auf verschiedenen Schiffstypen mit unterschiedlichen Bordnetzen betrieben werden. Der Spannungsumformer 26 stellt eine elektrische Ausgangsspannung sowohl dem elektrischen Antrieb 20 als auch die gleiche oder eine andere elektrische Ausgangsspannung an eine ebenfalls in dem Container 12 installierte Signalverarbeitungseinrichtung 28 zur Verfügung.

Die Signalverarbeitungseinrichtung 28 erhält Signale von dem akustisch wirksamen Teil der Schleppantenne 14, der elektroakustische und/oder optoakustische Wandler enthält, und zwar über eine elektrische oder optische Leitung, welche in der Schleppantenne 14 geführt ist. Da die Schleppantenne 14 neben dem akustisch wirksamen Abschnitt auch ein Zugkabel aufweist, enthält dieses Zugkabel neben einem mit hohen Zugkräften beaufschlagbaren Stahlseil zusätzlich elektrische Leitungen und ggf. Lichtwellenleiter. Vorzugsweise findet bereits in dem akustisch wirksamen Abschnitt der Schleppantenne 14 eine Signalvorverarbeitung statt. Diese ermöglicht eine Analog-Digital-Wandlung der elektrischen Signale, welche von elektroakustischen Wandlern erzeugt werden.

Die Signalverarbeitungseinrichtung 28 verarbeitet die von der Schleppantenne erhaltenen Signale zu Sonardaten, um eine Lagedarstellung des umgebenden Gewässers zu ermöglichen.

Innerhalb des Containers 12 ist ferner eine Steuerkonsole 30 vorgesehen, mittels der die Winde nebst weiterer Komponenten, welche nachfolgend als Verbringungseinrichtung 32 bezeichnet werden, gesteuert wird. Die Verbringungseinrichtung 32 umfasst neben der Winde 16 und dem Führungsschlitten 22 weitere mechanische Komponenten zum Ausbringen und Einholen der Schleppantenne 14 aber auch ein Windengestell 34 sowie den elektrischen Antrieb 20. Die Steuerkonsole 30 ermöglicht die Steuerung des gesamten Ausbring- und Einholvorgangs der Schleppantenne 14 sowie den Betrieb der Schleppsonaranlage einschließlich der visuellen Darstellung von Sonardaten, insbesondere auf einem Bildschirm.

Der Container 12 ist durch eine Trennwand 36 in einen Steuerraum 38 und einen Windenraum 40 zweigeteilt, wobei der Steuerraum 38 hermetisch gegen die Umgebung abgedichtet ist bzw. abdichtbar ist und die Signalverarbeitungseinrichtung 28 und die Steuerkonsole 30 beherbergt. Der Windenraum 40 weist heckseitig eine Tür 42, bevorzugt in Form einer zweiflügeligen Containertür, auf. Diese Tür 42 wird vor dem Ausbringen der Schleppantenne 14 geöffnet und verbleibt während der Durchführung einer Sonarmission geöffnet und wird nach Beendigung der Sonarmission und nach Einholung der Schleppantenne 14 wieder geschlossen. Eine hermetische Abdichtung des Windenraums 40 ist daher entbehrlich.

Der Steuerraum 38 weist eine (nicht dargestellte) Zugangstür auf. In entsprechender Weise weist der Windenraum 40 eine (nicht dargestellte) Zugangstür auf. Der Steuerraum 38 verfügt ferner über einen Notausstieg, so dass im Falle eines Versperrens der Zugangstür des Steuerraums ein Entkommen aus dem Container 12 gewährleistet ist.

Ferner verfügt der Steuerraum über ein Fenster 44 zum Windenraum 40, so dass eine sich im Steuerraum 38 befindende Bedienperson den Betrieb der Verbringungseinrichtung 32 und die Sonarmission über dieses Fenster 44 überwachen kann. Zusätzlich sind Überwachungskameras im Windenraum 40 zur Überwachung nicht über das Fenster 44 einsehbarer Bereiche nebst Beleuchtungsmitteln zur Ausleuchtung dieser Bereiche ebenso wie des gesamten Windenraums und des Bereichs vor der Containertür vorgesehen.

Der Steuerraum 38 ist vorzugsweise wärmegedämmt, d.h. er weist eine Wärmedämmung an seinen Wänden sowie an der Decke und am Boden auf. Ferner verfügt der Steuerraum 38 über eine Heizungsanlage 46, Feuerlöschmittel, Erste-Hilfe-Mittel, eine Satellitentelefonanlage sowie Kommunikationseinrichtungen zur Kommunikation mit Einrichtungen an Bord des den Container beherbergenden Schiffes und/oder mit Einrichtungen außerhalb dieses Schiffes. Der Container 12 ist daher mit einer bzw. mehreren demontierbaren Antennen 48 ausgestattet, welche vorzugsweise dachseitig über dem Steuerraum 38 vorgesehen sind.

Ferner umfasst der Container eine Notstromversorgung, um die elektrischen, insbesondere elektronischen Komponenten auch bei Ausfall der elektrischen Energieversorgung mit elektrischer Energie versorgen zu können.

Des Weiteren umfasst der Container 12 ein Satellitennavigationssystem bzw. ein Positionsbestimmungssystem mittels Satellit. Ferner ist bevorzugt ein AIS, d.h. ein automatisches Identifikationssystem vorgesehen, mittels dem Daten anderer Wasserfahrzeuge bzgl. deren Position und Identifikation empfangen sowie eigene Positions- und Identifikationsdaten an andere Wasserfahrzeuge gesendet werden können.

Der dargestellte Container umfasst somit alle erforderlichen Einrichtungen für den Betrieb einer Schleppsonaranlage 10, welche aus diesem Container 12 heraus betrieben, insbesondere gesteuert werden kann.

Über geeignete Schnittstellen, entweder über kabelgebundene Schnittstellen oder Funkschnittstellen, kann ein derartiges Schleppsonarsystem in ein umfassenderes Aufklärungssystem eingebunden werden. Ebenso kann die Schleppsonaranlage 10 Aufklärungsdaten anderer Aufklärungssysteme, wie Radar, Infrarotdetektionssystemen, Satellitenüberwachungssystemen und/oder optischer Überwachungssysteme empfangen und diese gemeinsam mit den mittels der Schleppantenne 14 gewonnenen Sonardaten verarbeiten, um eine Aufklärung innerhalb eines Seegebietes möglichst vollständig betreiben zu können.

Der dargestellte Container 12 basiert auf einem 20- oder 40-Fuss-Standard-Seecontainer (Container nach ISO 668). Er weist daher ein Grundgerüst auf, welches vier Ecksäulen 50, einen dachseitigen Rahmen 52 und die bodenseitige Rahmenkonstruktion 18 umfasst. Die Ecksäulen 50 sind fest mit dem dachseitigen Rahmen 52 und der bodenseitigen Rahmenkonstruktion 18 verbunden. Die bodenseitige Rahmenkonstruktion 18 weist einen Tragrahmen auf, wobei an diesem Tragrahmen die Verbringungseinrichtung 32 bzw. das Windengestell 34 der Winde 16 innerhalb des Containers 12 befestigt ist und der Tragrahmen Verzurrmittel zum Verzurren des Containers 12 auf einem Schiff oder einer anderen schwimmenden oder landgestützten Plattform, z.B. im Bereich von Hafenanlagen, aufweist. Da eine ausgebrachte Schleppantenne 14, insbesondere aber das Einholen der Schleppantenne 14 hohe Zugkräfte auf die Winde ausübt, muss der Container 12 horizontal an seiner Umgebung fixiert werden, damit er nicht in das umgebende Gewässer hineingezogen wird. Vorteilhafterweise sind die genannten Verzurrmittel daher insbesondere zur Aufnahme horizontal wirkender Kräfte ausgebildet.

Gemäß einem besonderen Ausführungsbeispiel weist die bodenseitige Rahmenkonstruktion 18 oberhalb des genannten Tragrahmens einen weiteren bodenseitigen Rahmen auf, der mit dem Tragrahmen verschweißt ist und vier Eckbeschläge, zwei Längsträge rund zwei Querträger umfasst, wobei diese Eckbeschläge jeweils mit einem Ende einer der Ecksäulen 50 fest verbunden sind. Bei diesem Ausführungsbeispiel wurde ein herkömmlicher Seecontainer auf den Tragrahmen aufgesetzt und fest mit diesem verschweißt, wobei dann die Winde bzw. das Windengestell nicht mit den relativ schwachen Bauteilen eines herkömmlichen Seecontainers direkt verbunden ist, sondern auf einer sehr viel stabiler auszubildenden Konstruktion, nämlich auf dem Tragrahmen. Dieses Ausführungsbeispiel ermöglicht einen kostengünstigen Standard-Seecontainer heranzuziehen, der eigentlich nicht für die Aufnahme hoher Zugkräfte über sich innerhalb des Containers befindenden Einbauten geeignet ist.

Der genannte Tragrahmen weist vier Eckbeschläge 54 an seinen Ecken sowie zwei mit diesen Eckbeschlägen 54 fest verbundene Tragrahmen-Längsträger 56 und zwei mit diesen Eckbeschlägen 54 fest verbundene Tragrahmen-Querträger auf. Zwischen einem oder mehreren Paaren benachbarter Eckbeschläge des Tragrahmens sind an einem oder beiden Tragrahmen-Längsträgern 56 und/oder an einem oder beiden Tragrahmen-Querträgern die genannten Verzurrmittel vorgesehen.

Gemäß einem vorteilhaften Ausführungsbeispiel weist der Tragrahmen Quertraversen auf, die zwischen den Tragrahmen-Längsträgern 56 angeordnet und fest mit diesen verbunden, insbesondere verschweißt sind und an denen das Windengestell 34 befestigt ist.

Der Tragrahmen weist eine oder mehrere Bodenplatten zum Abschirmen des Innenraums des Containers 12 zur bodenseitigen Umgebung auf, wobei diese Bodenplatten ein oder mehrere Lenzmittel, insbesondere Lenzschrauben, Lenzklappen und/oder Lenzpumpen aufweisen. Hierdurch ist gewährleistet, dass eingedrungenes Seewasser oder Regenwasser ebenso wie Kondenswasser problemlos abgeleitet werden kann. Insbesondere beim Einholen der Schleppantenne 14 wird nämlich Seewasser an Bord und somit in den Container hineingetragen. Dank dieser Lenzmittel kann dieses Wasser jedoch problemlos wieder aus dem Container 12 entfernt werden.

Der Container 12 weist an seiner Außenseite, vorzugsweise an der bodenseitigen Rahmenkonstruktion 18 und speziell am Tragrahmen außenliegende Erdungspunkte auf, um den Container 12 zu erden bzw. auf das gleiche elektrische Potenzial wie die Umgebung zu zwingen.

Gemäß einer besonderen Ausführungsform weist der Windenraum 40 eine an einer Seitenwand des Containers angeordnete Zugangstür auf, wobei der Seecontainer eine Sicherheitsschaltung umfasst, die bei geöffneter Zugangstür die elektrische Versorgung des elektrischen Antriebs 20 der Winde 16 im Windenraum 40 unterbricht und bei geschlossener Zugangstür die elektrische Versorgung des elektrischen Antriebs 20 gewährleistet. Somit wird eine Gefährdung von in den Windenraum 40 eintretenden Personen vermieden, da ein Öffnen der Zugangstür zum Windenraum 40 automatisch den Antrieb 20 der Winde 16 stoppt. Die Sicherheitsschaltung erhöht somit die Arbeitssicherheit während des Betriebs der Schleppsonaranlage 10.

Die Winde 16 ist mit einer mechanischen Feststellbremse ausgestattet, die bei Ausfall der elektrischen Energieversorgung ein unkontrolliertes Abrollen der Schleppantenne 14 verhindert. Darüber hinaus kann aber auch bei Ausbringung jedweder beliebiger Schleppantennenlänge die Winde angehalten werden, ohne dass nach dem Anhalten weitere elektrische Energie benötigt würde.

Gemäß einem weiteren Ausführungsbeispiel weist die Winde 16 einen Drehzahlgeber zum Ermitteln der angegebenen Kabel- und Schleppantennenlänge und eine Windensteuerung auf, die derart ausgebildet ist, dass im Windenbetrieb eine Mindestanzahl von Windungen, bspw. mindestens drei Windungen, des Zugkabels auf der Windentrommel 24 verbleibt. Eine derartige Mindestwindungsanzahl sorgt für eine Zugentlastung im Bereich der Windentrommel 24.

Gemäß einem weiteren vorteilhaften Ausführungsbeispiel weist die Winde 16 einen Schleifring zur Übertragung von elektrischen und/oder optischen Signalen auf. Dies ist vorteilhaft, da die Schleppantenne 14 eine elektrische Energieversorgung zur Versorgung der elektroakustischen und/oder optoakustischen Wandler und zur Signalaufbereitung bereits innerhalb der Schleppantenne 14 benötigt und die somit erzeugten Sensorsignale von der Schleppantenne 14 in die Signalverarbeitungseinrichtung 28 der Schleppsonaranlage 10 übertragen werden können. Diese Übertragung erfolgt vorzugsweise mittels elektrischer und/oder optischer Signale. Der genannte Schleifring ermöglicht die Durchleitung dieser Signale.

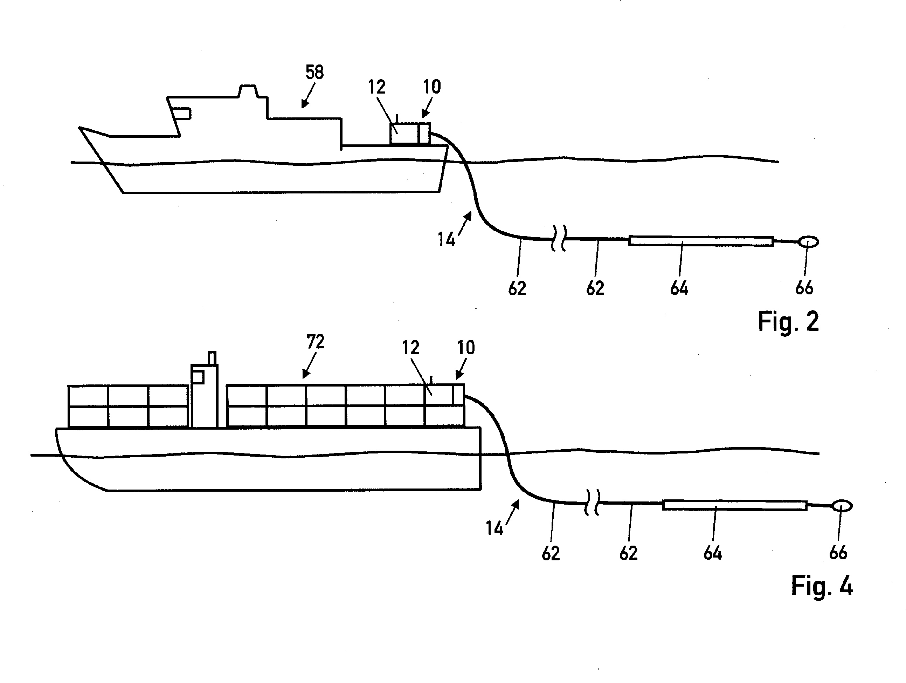

Fig. 2 zeigt die Anordnung eines Containers 12 gemäß Fig. 1 auf einem heckseitigen Deck 60, bspw. einem Helikopterdeck eines Schiffes 58. Ein derartiges Heck ist üblicherweise nicht zur Aufnahme von Containern mit Zugbelastung bzw. Einwirkung horizontaler Kräfte ausgelegt. Dank der genannten Verzurrmittel am Tragrahmen des Containers 12 können diese horizontalen Kräfte von der Schiffskonstruktion, insbesondere im Bereich des genannten Decks 60 aufgenommen werden.

Fig. 2 zeigt ferner die Schleppantenne, wobei ein dem Container 12 benachbarter Abschnitt aus einem Zugkabel 62 besteht, welches mehrere hundert Meter Länge aufweisen kann. An dem Zugkabel 62 ist der akustisch wirksame Abschnitt 64, vorzugsweise unter Zwischenschaltung eines Dämpfungsabschnitts, vorgesehen, welcher die elektroakustischen bzw. optoakustischen Wandler und ggf. eine Signalvorverarbeitung enthält. Am Ende der Schleppantenne 14 befindet sich, wiederum vorzugsweise unter Zwischenschaltung eines Dämpfungsabschnitts, ein Endstück 66 zur Ausrichtung und Stabilisierung der Lage der Schleppantenne.

Fig. 3 veranschaulicht die Situation gemäß Fig. 2 in einer vergrößerten Ansicht. Der Container 12 steht mit geöffneter Tür 42 am Ende des Decks 60. Durch die Türöffnung 68 gelangt die Schleppantenne 14 ins Freie und von dort in das umgebende Gewässer. Der Bereich um die Türöffnung 68 ist mit Absperrgittern 70 gesichert, so dass keine unbefugten Personen versehentlich in den Bereich der Schleppantenne gelangen können.

Fig. 4 zeigt die Positionierung eines erfindungsgemäßen Containers 12 auf einem Containerschiff 72, wobei der die Schleppsonaranlage 10 beinhaltende Container 12 in der letzten Reihe eckseitig am Containerschiff abgestellt ist. Gemäß Fig. 4 befindet sich dieser Container 12 an Deck des Containerschiffes 72.

Fig. 5 zeigt ein weiteres Ausführungsbeispiel zur Aufstellung des eine Schleppsonaranlage 10 beinhaltenden Containers 12 unter Deck, wobei jedoch die Position, d.h. der Betriebsort, derart gewählt ist, dass sich im Bereich der Tür 42 des Containers 12 eine Öffnung in der Schiffswand befindet, so dass die Schleppantenne 14 durch diese Öffnung in das umgebende Gewässer ausgebracht werden kann.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist daher nicht auf die beschriebenen bzw. beanspruchten Merkmalskombinationen beschränkt. Vielmehr sind alle Merkmalskombinationen als offenbart zu betrachten.

## Patentansprüche

1. Schleppsonaranlage (10) mit einer Schleppantenne (14), einer Verbringungseinrichtung (32) zum Verbringen der Schleppantenne (14) in ein bzw. aus einem Gewässer, einer Signalverarbeitungseinrichtung (28) zur Verarbeitung der Signale der Schleppantenne (14) und wenigstens einer Steuerkonsole (30) zum Steuern der Schleppsonaranlage (10),
**dadurch gekennzeichnet, dass**
die Schleppantenne (14), die Verbringungseinrichtung (32), die Signalverarbeitungseinrichtung (28) und die Steuerkonsole (30) in einem unabhängig von einem Schiff transportierbaren Container (12) installiert sind und der Container (12) eine bodenseitige Rahmenkonstruktion mit einem Tragrahmen aufweist, wobei an diesem Tragrahmen die Verbringungseinrichtung (32) innerhalb des Containers (12) befestigt ist und der Tragrahmen Verzurrmittel zum Verzurren des Containers (12) auf einem Schiff oder an einer anderen schwimmenden oder landgestützten Plattform aufweist.

2. Schleppsonaranlage (10) nach Anspruch 1,
**dadurch gekennzeichnet, dass**
die Schleppantenne (14) schwerer als Wasser ist.

3. Schleppsonaranlage (10) nach Anspruch 1 oder 2,
**dadurch gekennzeichnet, dass**
ein akustisch wirksamer Abschnitt (64) der Schleppantenne (14) an seinen Enden Mittel zum Befestigen von Verankerungseinrichtungen zum Verankern dieses Abschnitts am Gewässergrund aufweist.

4. Schleppsonaranlage (10) nach einem der vorhergehenden Ansprüche,
**dadurch gekennzeichnet, dass**
der Container (12) eine Funkkommunikationseinrichtung zur Übertragung von Sonardaten von der Schleppsonaranlage (10) an eine Führungsstelle außerhalb des Containers (12) und/oder zum Empfang von Steuerdaten für die Schleppsonaranlage (10) von der Führungsstelle aufweist.

5. Schleppsonaranlage (10) nach einem der vorhergehenden Ansprüche,
**dadurch gekennzeichnet, dass**
der Container (12) einen durch eine Trennwand (36) in einen Steuerraum (38) und einen Windenraum (40) zweigeteilten Innenraum aufweist, wobei der Steuerraum (38) hermetisch gegen die Umgebung abgedichtet ist bzw. abdichtbar ist und die Signalverarbeitungseinrichtung (28) und die Steuerkonsole (30) aufweist und wobei der Windenraum (40) die Verbringungseinrichtung (32) aufweist, welche eine Winde (16) umfasst.

6. Schleppsonaranlage (10) nach Anspruch 5,
**dadurch gekennzeichnet, dass**
der Steuerraum (38) eine Zugangstür, einen Notausstieg, ein Fenster (44) zum Windenraum (40), eine Klimaanlage, eine Wärmedämmung zur Wärmedämmung des Steuerraums (38) gegenüber der Umgebung, eine Heizungsanlage, Feuerlöschmittel, Erste-Hilfe-Mittel, eine Satellitentelefonanlage, Kommunikationseinrichtungen zur Kommunikation mit Einrichtungen an Bord des den Container (12) beherbergenden Schiffes (58) und/oder mit Einrichtungen außerhalb dieses Schiffes (58), eine Notstromversorgung, ein Satellitennavigationssystem und/oder ein automatisches Identifikationssystem aufweist.

7. Schleppsonaranlage (10) nach einem der vorhergehenden Ansprüche,
**dadurch gekennzeichnet, dass**
sie einen im Container (12) installierten Spannungsumformer (26) aufweist zur Bereitstellung einer vorbestimmten bzw. vorbestimmbaren Ausgangsspannung bei variabler Eingangsspannung.

8. Verfahren zur Durchführung einer Sonarmission mittels einer Schleppsonaranlage (10) gemäß Anspruch 1 mit den Schritten:
a) Transportieren der Schleppsonaranlage (10) zu einem Betriebsort,
b) Ausbringen der Schleppantenne (14) aus dem Container (12) in ein Gewässer mittels der Verbringungseinrichtung (32),
c) Steuern einer Sonarmission mittels Steuerkonsole (30) innerhalb des Containers (12) und
d) Einholen der Schleppantenne (14) aus dem Gewässer in den Container (12) nach Beendigung der Sonarmission.

9. Verfahren nach Anspruch 8 mit dem weiteren Schritt des Abtransportierens der Schleppsonaranlage (10) zu einem neuen Betriebsort oder einem Lagerort.

10. Verfahren nach Anspruch 8 oder 9,
wobei der Betriebsort ein heckseitiger Ort an oder unter Deck eines Schiffes ist.

11. Verfahren nach einem der Ansprüche 8 bis 10,
wobei der Betriebsort eine Hafeneinrichtung ist.

12. Verfahren nach einem der Ansprüche 8 bis 11,
wobei die Steuerkonsole (30) Sonardaten an eine Führungsstelle außerhalb des Containers (12) überträgt und/oder von dieser Führungsstelle Steuerdaten empfängt.

13. Verfahren nach einem der Ansprüche 8 bis 12,
wobei der Betriebsort ein Schiff ist und die Sonardaten per Funk an ein anderes Schiff übertragen werden.

14. Verfahren nach einem der Ansprüche 8 bis 13,
wobei Sonardaten weiterer Sonaranlagen, insbesondere Schleppsonaranlagen, Radardaten von Radaranlagen, Infrarotdetektionsdaten von Infrarotdetektionseinrichtungen, jeweils insbesondere an Bord anderer Schiffe, und/oder Satellitenüberwachungsdaten von Satellitenüberwachungsanlagen per Funk an die Steuerkonsole (30) übertragen werden.

## Claims

1. Towed sonar assembly (10) with a trailing antenna (14), a transport device (32) for transporting the trailing antenna (14) respectively into and out of a body of water, a signal processing device (28) for processing the signals of the trailing antenna (14) and at least one control console (30) for controlling the towed sonar assembly (10), **characterised by** that the trailing antenna (14), the transport device (32), the signal processing device (28) and the control console (30) are installed in a container (12) that can be transported independently of a ship and the container (12) has a frame structure on the bottom side with a support frame, wherein the transport device (32) is attached inside the container (12) to this support frame and the support frame has lashing means for lashing the container (12) on a ship or on another floating or land-based platform.

2. Towed sonar assembly (10) according to claim 1, **characterised by** that the trailing antenna (14) is heavier than water.

3. Towed sonar assembly (10) according to claim 1 or 2, **characterised by** that an acoustically active section (64) of the trailing antenna (14) has means at its ends for attaching anchoring devices for anchoring this section on the bottom of the body of water.

4. Towed sonar assembly (10) according to one of the preceding claims, **characterised by** that the container (12) has a radio communication device for transmitting sonar data from the towed sonar assembly (10) to a control point outside the container (12) and/or for receiving control data for the towed sonar assembly (10) from the control point.

5. Towed sonar assembly (10) according to one of the preceding claims, **characterised by** that the container (12) has an interior space divided by a partition wall (36) into a control room (38) and a winching room (40), wherein the control room (38) is or can be sealed hermetically against the environment and has the signal processing device (28) and the control console (30) and wherein the winching room (40) has the transport device (32), which comprises a winch (16).

6. Towed sonar assembly (10) according to claim 5, **characterised by** that the control room (38) has an access door, an emergency exit, a window (44) onto the winching room (40), an air conditioning system, thermal insulation for thermally insulating the control room (38) from the environment, a heating system, fire extinguishers, first aid means, a satellite telephone system, communication devices for communicating with devices on board the ship (58) hosting the container (12) and/or with devices outside this ship (58), an emergency power supply, a satellite navigation system and/or an automatic identification system.

7. Towed sonar assembly (10) according to one of the preceding claims, **characterised by** that it has a voltage transformer (26) installed in the container (12) for supplying a predetermined or predeterminable output voltage at a variable input voltage.

8. Method for carrying out a sonar mission by means of a towed sonar assembly (10) according to claim 1 with the steps:
a) Transporting of the towed sonar assembly (10) to an operating location,
b) Transferring the trailing antenna (14) from the container (12) to a body of water by means of the transport device (32),
c) Controlling a sonar mission by means of a control console (30) inside the container (12) and
d) Recovering the trailing antenna (14) from the body of water into the container (12) following completion of the sonar mission.

9. Method according to claim 8 with the further step of transporting the towed sonar assembly (10) away to a new operating location or a storage location.

10. Method according to claim 8 or 9, wherein the operating location is a stern location on or below the deck of a ship.

11. Method according to one of claims 8 to 10, wherein the operating location is a port facility.

12. Method according to one of claims 8 to 11, wherein the control console (30) transmits sonar data to a control point outside the container (12) and/or receives control data from this control point.

13. Method according to one of claims 8 to 12, wherein the operating location is a ship and the sonar data are transmitted by radio to another ship.

14. Method according to one of claims 8 to 13, wherein sonar data of other sonar assemblies, in particular towed sonar assemblies, radar data from radar systems, infrared detection data from infrared detection devices, in particular on board other ships respectively, and/or satellite monitoring data from satellite monitoring systems are transmitted by radio to the control console (30).

## Revendications

1. Installation de flûte sonar (10) comprenant une antenne remorquée (14), un dispositif de transfert (32) destiné à transférer l'antenne remorquée (14) dans les et/ou hors des eaux, un dispositif de traitement de signal (28) destiné au traitement des signaux de l'antenne remorquée (14) et au moins un pupitre de commande (30) destiné à commander l'installation de flûte sonar (10),
**caractérisée en ce que**
l'antenne remorquée (14), le dispositif de transfert (32), le dispositif de traitement de signal (28) et le pupitre de commande (30) sont installés dans un conteneur (12) pouvant être transporté indépendamment d'un navire et le conteneur (12) comporte une construction de cadre côté fond comprenant un cadre porteur, le dispositif de transfert (32) étant fixé à l'intérieur du conteneur (12) sur ce cadre porteur et le cadre porteur comportant des moyens d'arrimage destinés à arrimer le conteneur (12) sur un navire ou sur une autre plate-forme flottante ou basée à terre.

2. Installation de flûte sonar (10) selon la revendication 1,
**caractérisée en ce que**
l'antenne remorquée (14) est plus lourde que l'eau.

3. Installation de flûte sonar (10) selon la revendication 1 ou 2,
**caractérisée en ce qu'**
une section (64) efficace du point de vue acoustique de l'antenne remorquée (14) comporte à ses extrémités des moyens destinés à fixer des dispositifs d'ancrage pour ancrer cette section au fond des eaux.

4. Installation de flûte sonar (10) selon l'une des revendications précédentes,
**caractérisée en ce que**
le conteneur (12) comporte un dispositif de radiocommunication destiné à la transmission de données sonar de l'installation de flûte sonar (10) à un poste de commande hors du conteneur (12) et/ou à la réception de données de commande venant du poste de commande pour l'installation de flûte sonar (10).

5. Installation de flûte sonar (10) selon l'une des revendications précédentes,
**caractérisée en ce que**
le conteneur (12) comporte un espace intérieur divisé en deux par une paroi de séparation (36) en un espace de commande (38) et un espace de treuil (40), l'espace de commande (38) étant ou pouvant être fermé hermétiquement à l'environnement et comportant le dispositif de traitement de signal (28) et le pupitre de commande (30), et l'espace de treuil (40) comportant le dispositif de transfert (32) qui comprend un treuil (16).

6. Installation de flûte sonar (10) selon la revendication 5,
**caractérisée en ce que**
l'espace de commande (38) comporte une porte d'accès, une sortie de secours, une fenêtre (44) sur l'espace de treuil (40), une installation de climatisation, une isolation thermique pour l'isolation thermique de l'espace de commande (38) par rapport à l'environnement, une installation de chauffage, des moyens d'extinction d'incendie, du matériel de premiers secours, une installation de téléphone satellite, des dispositifs de communication pour la communication avec des dispositifs à bord du navire (58) accueillant le conteneur (12) et/ou avec des dispositifs hors de ce navire (58), une alimentation de secours, un système de navigation par satellites et/ou un système d'identification automatique.

7. Installation de flûte sonar (10) selon l'une des revendications précédentes,
**caractérisée en ce qu'**
elle comporte un transformateur de tension (26) installé dans le conteneur (12), destiné à mettre à disposition une tension de sortie prédéterminée ou pouvant être prédéterminée à tension d'entrée variable.

8. Procédé d'exécution d'une mission sonar à l'aide d'une installation de flûte sonar (10) selon la revendication 1, comprenant les étapes consistant à :
a) transporter l'installation de flûte sonar (10) dans un lieu de service,
b) transférer l'antenne remorquée (14) hors du conteneur (12) dans les eaux au moyen du dispositif de transfert (32),
c) commander une mission sonar au moyen du pupitre de commande (30) à l'intérieur du conteneur (12) et
d) haler l'antenne remorquée (14) hors des eaux dans le conteneur (12) après la fin de la mission sonar.

9. Procédé selon la revendication 8 comprenant l'étape supplémentaire consistant à transporter l'installation de flûte sonar (10) dans un nouveau lieu de service ou un lieu de stockage.

10. Procédé selon la revendication 8 ou 9,
le lieu de service étant un lieu côté poupe sur ou sous le pont d'un navire.

11. Procédé selon l'une des revendications 8 à 10,
le lieu de service étant une installation portuaire.

12. Procédé selon l'une des revendications 8 à 11,
le pupitre de commande (30) transmettant des données sonar à un poste de commande hors du conteneur (12) et/ou recevant des données de commande venant de ce poste de commande.

13. Procédé selon l'une des revendications 8 à 12,
le lieu de service étant un navire et les données sonar étant transmises par radio à un autre navire.

14. Procédé selon l'une des revendications 8 à 13,
des données sonar d'autres installations sonar, en particulier d'installations de flûte sonar, des données radar d'installations radar, des données de détection infrarouge de dispositifs de détection infrarouge respectivement en particulier à bord d'autres navires, et/ou des données de suivi par satellite d'installations de suivi par satellite étant transmises par radio au pupitre de commande (30).
